# EUROPEAN PATENT SPECIFICATION

(11) **EP 1 651 467 B1**
(45) Date of publication and mention of the grant of the patent: **01.05.2013**
(21) Application number: 04801830.3
(22) Date of filing: 16.03.2004
(51) Int. Cl.: B60R 21/26

(54) **COMPACT MULTI-LEVEL OUTPUT HYBRID GAS GENERATOR**
KOMPAKTER HYBRIDGASGENERATOR MIT MEHRSTUFIGER AUSGABE
GENERATEUR DE GAZ HYBRIDE A SORTIE MULTINIVEAU COMPACT

(30) Priority: 06.08.2003 US 634797
(43) Date of publication of application: 03.05.2006
(73) Proprietor: ARC Automotive, Inc., Knoxville, TN 37921 (US)
(72) Inventor: BILBREY, David, A., Knoxville, TN 37921 (US); COLBURN, Scott, Joseph, Oak Ridge, TN 37830 (US); HUSBAND, Richard, C., Knoxville, TN 37922 (US); ROVITO, Robert, W., Knoxville, TN 37922 (US); HANCOCK, Samuel, Morgan, Knoxville, TN 37920 (US)
(74) Representative: Perani, Aurelio
(86) International application number: PCT/US2004/007976
(87) International publication number: WO 2005/016695

(56) References cited:
- EP-A- 1 323 594
- DE-A1- 19 753 811
- US-A- 5 582 428
- US-A- 5 762 367
- US-A- 5 794 973
- US-A1- 2002 038 948
- US-A1- 2003 047 923
- US-A1- 2003 057 689
- US-B1- 6 168 200
- US-B1- 6 213 503
- US-B1- 6 213 503
- US-B1- 6 253 683

## Description

### BACKGROUND OF THE INVENTION

### Field of the Invention

The present invention relates generally to an inflator or gas generator for an air bag or other safety device and, more specifically, to a compact multi-level output hybrid inflator or gas generator which can selectively release gas at different rates and levels and thus enable the air bag or another type of safety device to be deployed or operated at different output levels in accordance with different sensor inputs.

### Description of the Related Art

Recently, there has been a demand for controlling the rate and amount of inflation or operation of safety devices such as air bag restraint systems in accordance with variables such as passenger size, position, seat belt usage and the velocity of a vehicle at the time of collision.

In order to provide optimal occupant protection, different levels of output are required from the airbag inflator. For example, in a high-speed collision with a large unbelted person, full rapid inflation of the air bag is required to provide the best restraint. In lower speed crashes with smaller sized occupants or even out-of-position occupants, a lower, slower rate of inflation is required so as not to inadvertently injure the occupant but still provide enough inflation to effect appropriate restraint.

In currently available air bag inflators intended for multi-level or variable output function, the performance is accomplished primarily with inflators which are made up of two individual inflators of the same type that may share one manifold, or by individual propellant chambers in a common pressure vessel sharing one common manifold.

Utilizing two separate inflators of the hybrid type, for example, results in large, heavy and expensive designs since nearly every component is duplicated. For example, there are two distinct pressure vessels, with redundant closures, seals, and in some cases diffusers or manifolds. Additionally, there is the added requirement of securing the two inflators to a common platform, which in turn increases cost, weight, and complexity in manufacturing.

The second approach of having separate propellant chambers encapsulated in one common pressure vessel results in more efficient packaging and reduced cost if the components are shared by the two propellant charges. To achieve different levels of inflation, it has been proposed in U.S. Patent No. 3,773,353 to Trowbridge et al. to provide two separate charges and to ignite one in the event that a slow inflation is required and to ignite both in the event of a high speed collision, thus achieving the very rapid inflation and deployment of the air bag which is necessary under such circumstances. In this device the charges are arranged within a housing which is filled with a non-toxic gas under pressure. This housing is sealed by a burst plate that is punched out by a piston and rod type of arrangement when a first of the two charges is detonated. This arrangement suffers from the drawback of being relatively complex and therefore, relatively expensive. For example, no less than three burst plate arrangements are necessary. Also, the charges are each isolated from the reservoir and reservoir gas by an inner housing and a respective rupturable closure.

U.S. Patent No. 3,905,515 to Allemann discloses another multi-stage inflator assembly which utilizes two separate charges and which disposes the charges in a chamber which is used to store a non-noxious gas under pressure. However, this arrangement is even more complex than that in U.S. Patent No. 3,773,353. In this arrangement a portion of the burst disc forms the head of a slidable shuttle valve member which is projectable into an exhaust passage to partially throttle the outflow of gases following a detonation of one or both of the two charges.

US 6213503B discloses a center bulkhead with a primary gas generating unit connected at its inner end to one side of the bulkhead, and a secondary gas generating unit connected at its inner end to the opposite side of the bulkehad.

Consequently, there is a need for a cost-effective, lightweight, compact, simple multi-level output inflator or gas generator for air bags and the like. This need is met by the new and improved multi-level output hybrid inflator and gas generator of the present invention.

### SUMMARY OF THE INVENTION

It is an object of the present invention, therefore, to overcome the disadvantages of the prior art and to provide a cost-effective, lightweight, compact and simple multi-level output hybrid inflator or gas generator which is reliable in operation.

A further object of the present invention is to provide a multi-level output hybrid inflator or the like with two gas generators, which permits ignition of the gas generators either separately, simultaneously or in a timed sequence to effect air bag inflation or operation of a safety device at different rates in accordance with sensor inputs resulting from a crash or the like.

It is a further object of the present invention to provide a multi-level output inflator or gas generator which utilizes a common pressure vessel for a primary hybrid type gas generator and a secondary hybrid type gas generator.

A still further object of the present invention is to provide such a multi-level output inflator or gas generator which may be easily converted to a single level inflator or gas generator in a cost effective manner.

Another object of the present invention is to provide such a multi-level output inflator or gas generator with one or more simple and effective, non-hermetic dividers or divider walls in the center portion thereof that separate the primary and secondary gas generators.

An additional object of the present invention is to provide such a multi-level output inflator or gas generator with exit orifices and a diffuser located in the center portion thereof to enable it to remain substantially thrust-neutral during deployment.

A further object of the present invention is to provide such a multi-level inflator or gas generator with a standpipe connected to the diffuser in the center portion thereof that, in one embodiment, protrudes outwardly in one direction with radial or lateral flow orifices for improved gas distribution and serving to direct flow away from the occupant.

A still further object of the present invention is to provide such a multi-level inflator or gas generator with dividers in the center portion thereof that separate the primary and secondary gas generators.

Still another object of the present invention is to provide such a multi-level output inflator or gas generator which is simple in construction and easy to assemble to minimize the cost and size of the assembly.

These and other objects of the present invention are achieved by providing a multi-level output inflator or gas generator for inflating a vehicle safety restraint such as an air bag, comprising a common pressure vessel for a primary hybrid type gas generator and a secondary hybrid type gas generator that are separated from each other by one or more simple non-hermetic dividers or divider walls in the center portion thereof. In one embodiment, the divider or divider wall is a separate member. In another embodiment, the dividers are provided by adjacent end walls of the gas generant canisters located in the center portion of the inflator. The gases from the primary and secondary gas generators are directed to a common diffuser in the center portion thereof for inflation of the air bag. The combination of a primary hybrid gas generator and a secondary hybrid gas generator in a simple common pressure vessel in a single multi-level output inflator minimizes size and cost. Also, simple assembly methods, such as magnetic forming, swaging, crimping and welding may be used to assemble the present multi-level output inflator or gas generator because of its simple construction.

### BRIEF DESCRIPTION OF THE DRAWINGS

FIGURE 1 is a side elevational view in section of a first example not forming part of the present invention of the multi-level output inflator of the present invention;
FIGURE 2 is a side elevational view in section of a second example not forming part of the present invention of the multi-level output inflator of the present invention constructed for single level operation;
FIGURE 3 is a side elevational view in section of a modified example not forming part of the present invention of the inflator shown in FIGURE 1;
FIGURE 4 is a side elevational view in section of a modified example not forming part of the present invention of the multi-level output inflator shown in FIGURE 2;
FIGURE 5 is a side elevational view in section of an embodiment according to the present invention of the multi-level output inflator of the present invention;
FIGURE 6 is a side elevational view in section of a modified embodiment of the multi-level inflator shown in FIGURE 5;
FIGURE 7 is a side elevational view in section of another embodiment of the multi-level output inflator of the present invention constructed for single level operation;
FIGURE 8 is a side elevational view in section of a modified embodiment of the inflator shown in FIGURE 7;
FIGURE 9 is a perspective view of one embodiment of a gas generant canister for the multi-level output inflator of the present invention;
FIGURE 10 is a side elevational view of a portion of a multi-level inflator in accordance with the present invention showing a release device movably mounted adjacent to the secondary exit orifice and rupture disk, and being connected to a tether for limiting the expansion of the air bag;
FIGURE 11 is a side elevational view similar to FIGURE 10 in which the release device has been moved outwardly by the flow of gas through the secondary exit orifice to release the tether and allow additional expansion of the air bag;
FIGURE 12 is a side elevational view of a second embodiment of a release device movably mounted adjacent to the secondary exit orifice and rupture disk, and being connected to a tether for limiting the expansion of the air bag; and
FIGURE 13 is a side elevational view similar to FIGURE 12 in which the release device has been moved outwardly by gas flow through the secondary exit orifice to release the tether and allow additional expansion of the air bag.

### DESCRIPTION OF THE PREFERRED EMBODIMENTS

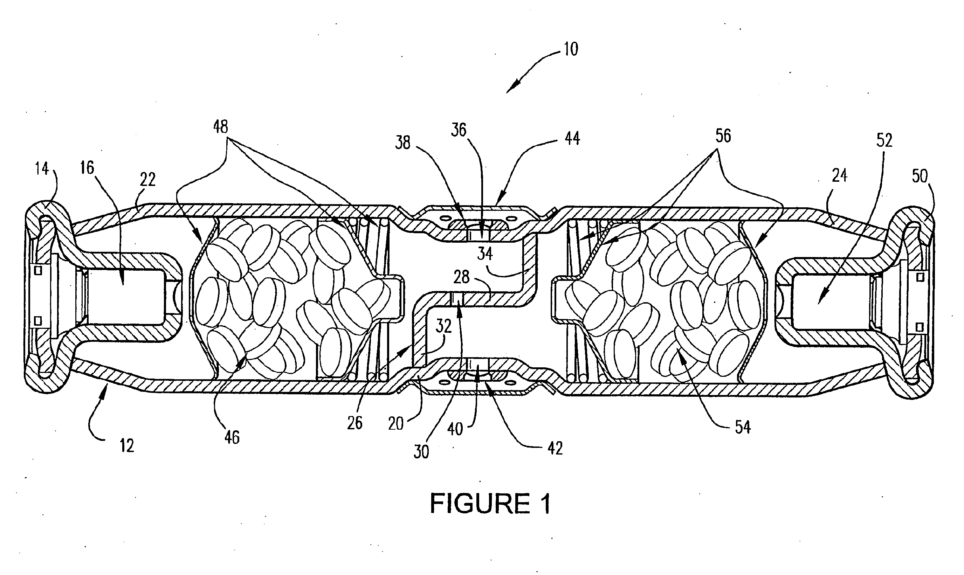

FIGURE 1 illustrates a first example not forming part of the present invention of the multi-level output inflator or gas generator 10 of the present invention. The inflator 10 comprises an elongated pressure vessel 12 formed of any suitable material, such as steel, aluminum or the like. An igniter body 14 formed of any suitable material, such as steel, aluminum or the like, and supporting a primary ignition device 16 of any suitable construction is secured to a first end of the pressure vessel 12 in any suitable manner, such as by crimping or a friction weld. The primary ignition device 16, e.g., may be an initiator or a microgas generator.

The pressure vessel 12 preferably is formed with an indented portion 20 of any suitable configuration near the middle thereof. The indented portion 20 serves to define a primary gas generant portion 22 of the pressure vessel between the indented portion and the primary ignition device 16, and a secondary gas generant portion 24 between the indented portion 20 and the second or opposite end of the pressure vessel 12.

A divider or divider wall 26 formed of any suitable material such as steel or aluminum is positioned adjacent to or secured at its ends in any suitable manner to opposite sides of the indented portion 20 of the pressure vessel 12 to separate it into the primary and secondary gas generant portions 22 and 24, respectively. The divider 26 comprises a central, substantially longitudinally extending portion 28 which may have one or more communication ports 30 of any suitable size therethrough, a first substantially transverse end portion 32 disposed adjacent to or secured to the indented portion 20 on one side thereof near the primary gas generant portion 22, and a second substantially transverse end portion 34 disposed adjacent to or secured to the indented portion 20 on the other side thereof near the secondary gas generant portion 24. It is noted that the divider 26 is simple in construction and need not be hermetically connected or sealed to the pressure vessel 12. Also, the shape of the divider 26 may be somewhat different so long as it accomplishes the purpose described herein. Within the scope of the present invention, the divider 26 may be formed without any communication ports 30 therethrough.

The indented portion 20 of the pressure vessel 12 has a primary exit orifice 36 of any suitable size on one side thereof that is covered by a primary rupture disk 38 of any suitable construction, and a secondary exit orifice 40 of any suitable size on the other side thereof that is covered by a secondary rupture disk 42 of any suitable construction. A generally cylindrical diffuser 44 of any suitable construction surrounds the indented portion 20 and the primary and secondary exit orifices 36 and 40, respectively, and is secured to the pressure vessel in any suitable manner, such as by welding. The diffuser 44 is adapted for communication with an air bag module or other safety device (not shown).

Within the primary gas generant portion 22 of the pressure vessel there are mounted primary gas generating energetics 46 of any suitable type, such as pellets formed of any suitable gas generating composition, that may be surrounded by any suitable type of retention and anti-rattle devices 48. Also, the primary energetics 48 may be in the form of a solid grain or the like.

An igniter body 50 formed of any suitable material and supporting a secondary ignition device 52 of any suitable construction is secured to the second or opposite end of the pressure vessel 12 in any suitable manner, such as by crimping or a friction weld. Within the secondary gas generant portion 24 of the pressure vessel 12 there are mounted secondary gas generating energetics 54 of any suitable type, such as pellets formed of any suitable gas generating composition, that may be surrounded by any suitable type of retention and anti-rattle devices 56. The secondary energetics 54 may be in the form of a solid grain or the like, and may be different in type and amount from the primary energetics 46.

The primary gas generant portion 22 and secondary gas generant portion 24 of the pressure vessel 12 are filled with a suitable gas, e.g., nitrogen or an inert gas such as argon or helium, or a mixture thereof, that is under a suitable predetermined pressure.

In one operation of the inflator or gas generator 10, upon the sensing of a vehicle crash or the like, the primary ignition device 16 will be fired to ignite the primary energetics 46 to generate primary combustion gas that increases the pressure of the gas in the primary gas generant portion 22 at a rate faster than that in the secondary portion 24 via the communication port or ports 30 or through leakage to cause the primary rupture disk 38 to fail and allow the pressurized gas to exit through the primary exit orifice 36 into the diffuser 44. Thereafter, the secondary rupture disk 42 may be constructed to rupture when exposed to increased pressure resulting from gas flow through the communication port or ports 30 into the secondary gas generant portion 24. The diffuser 44, being centrally located, directs the gas in a substantially thrust-neutral, radial pattern into the air bag module (not shown) to inflate the air bag.

Depending on the nature of the vehicle crash and other variables such as passenger size and position, the secondary energetics 54 may be ignited alone, simultaneously with or in a timed sequence before or after the ignition of the primary energetics 46 to establish different rates and levels of inflation of the air bag. The operation of the secondary gas generator is the same as that hereinbefore described with respect to the primary gas generator. The increased pressure in the secondary gas generant portion 24 caused by the ignition of the primary and/or secondary energetics results in the failure of the secondary rupture disk 42 to allow the pressurized gas to exit through the secondary exit orifice 40 into the diffuser 44.

In one embodiment, when one or more communication ports 30 are provided in the divider 26, the primary and secondary rupture disks 38 and 42 may be of the same construction so that they rupture at the same pressure. When the primary energetics 46 are ignited, therefore, the pressure will build up faster on the primary rupture disk 38 and it will rupture before the rupture of the secondary rupture disk 42 caused by gas flow through the communication port or ports 30 and increased pressure in the secondary gas generant portion 24. This embodiment is advantageous in that the same rupture disk can be used for the primary and secondary exit orifices 36 and 40.

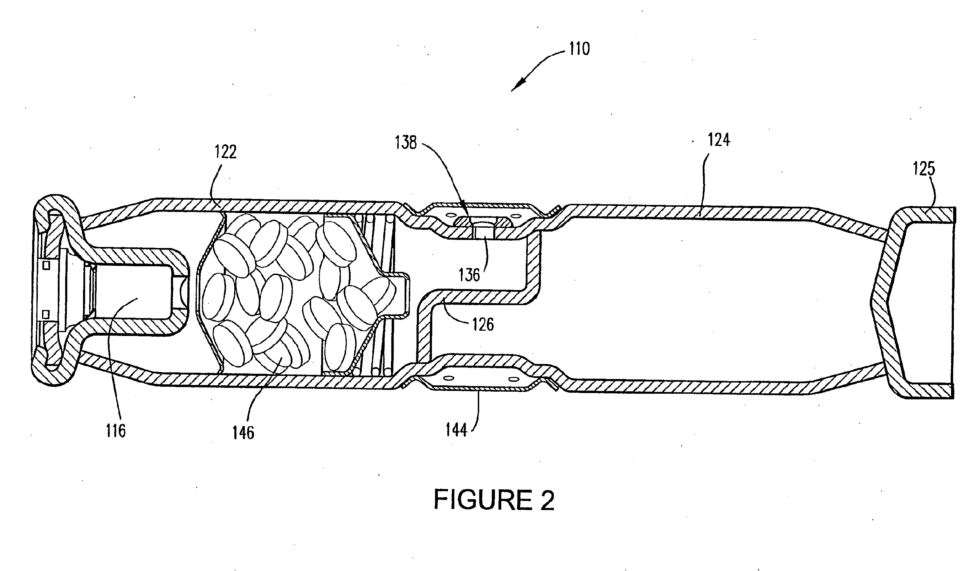

FIGURE 2 is directed to a second example not forming part of the present invention of the inflator of the present invention which illustrates the simple manner in which the multi-level inflator of FIGURE 1 can be converted into a single level inflator 110 wherein there are no energetics in the secondary portion 124 of the pressure vessel 112. The end of the secondary portion 124 is closed by a closure member 125 of any suitable construction that is secured thereto in any suitable manner. The primary gas generant portion 122 of the pressure vessel 112 includes a primary ignition device 116, primary energetics 146, a primary exit orifice 136, a primary rupture disk 138, a diffuser 144 and a divider 126 which are constructed and operate in substantially the same manner as those shown in FIGURE 1. In an alternate construction, when a communication port is provided in the divider 126, a secondary exit orifice and rupture disk like those shown in FIGURE 1 may be provided in the secondary portion 124.

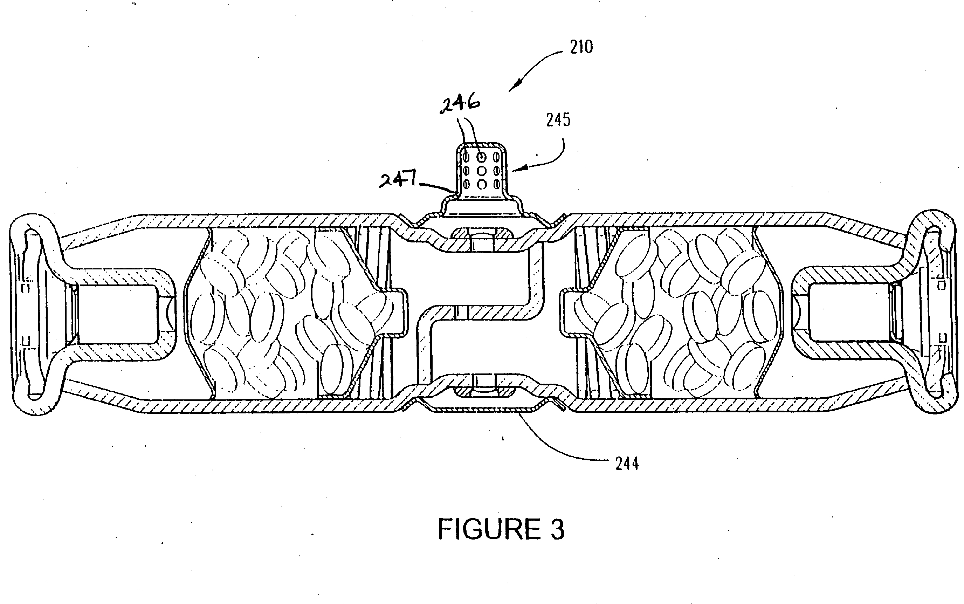

FIGURE 3 illustrates a multi-level output inflator 210 that is substantially the same in construction and operation to the inflator 10 shown in FIGURE 1, with the exception that the diffuser 244 is provided with a standpipe 245 for interface with the air bag module (not shown). The standpipe 245 is provided with a plurality of orifices 246 in the sidewall 247 thereof for the purpose of directing the flow of the pressurized gas laterally or radially outwardly therefrom in a direction away from the occupant of the vehicle in which the air bag (not shown) is mounted. Preferably, the orifices 246 are uniformly spaced in the sidewall 247 to provide for uniform flow outwardly therefrom and improved gas distribution. Alternatively, the orifices may be provided in any suitable pattern in the sidewall for axial or other flow therefrom.

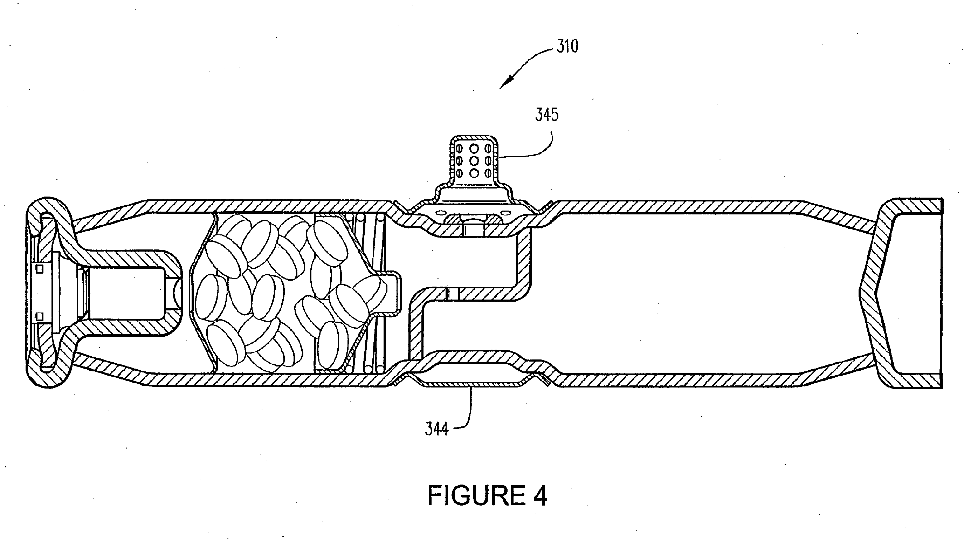

FIGURE 4 illustrates a single level inflator 310 that is substantially the same in construction and operation to the inflator 110 shown in FIGURE 2, with the exception that the diffuser 344 is provided with a standpipe 345 like the standpipe 245 shown in FIGURE 3 for interface with the air bag module or other safety device (not shown).

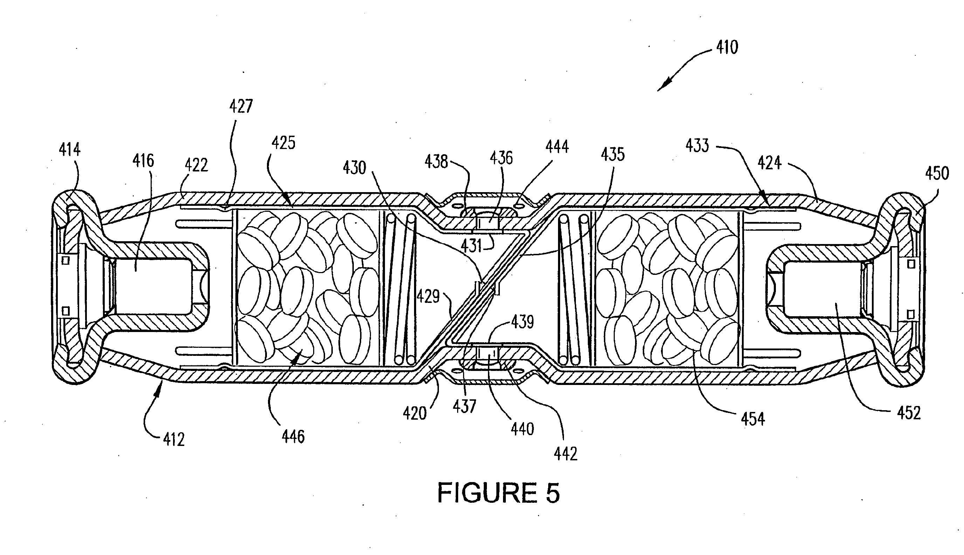

FIGURE 5 illustrates an embodiment according to the present invention of the multi-level output inflator 410 of the present invention. The inflator 410 comprises an elongated pressure vessel 412 formed of any suitable material. An igniter body 414 formed of any suitable material and supporting a primary ignition device 416 of any suitable construction is secured to a first end of the pressure vessel 412 in any suitable manner such as by crimping. The primary ignition device 416 may be an initiator or a microgas generator.

The pressure vessel 412 preferably is formed with an indented portion 420 of any suitable configuration near the middle thereof. The indented portion 420 serves to define a primary gas generant portion 422 of the pressure vessel between the indented portion 420 and the primary ignition device 416, and a secondary gas generant portion 424 between the indented portion 420 and the second or opposite end of the pressure vessel 412.

A primary gas generant canister 425 formed of any suitable material such as alloy steel is mounted within the primary gas generant portion 422 of the pressure vessel and conforms generally to the interior shape of the pressure vessel and the adjacent indented portion 420 thereof Primary gas generating energetics 446 of any suitable type are mounted within the canister 425 and are retained in position therein by an indentation 427 or the like formed in the outer end of the canister. The inner end of the primary canister 425 is closed by an angled divider wall 429 that extends from one side of the indented portion 420 of the pressure vessel 412 to the other side thereof to separate it into the primary and secondary gas generant portions 422 and 424, respectively. As shown in FIGURE 5, the divider wall 429 may have one or more communication ports 430 of any suitable size formed therethrough in any suitable manner such as by stamping. Also, the primary canister 425 has an orifice 431 through the portion of the outer wall thereof that is adjacent to the center of the indented portion 420 of the pressure vessel 412.

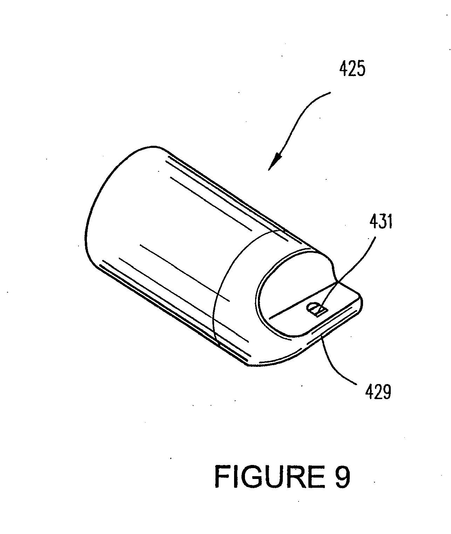

FIGURE 9 illustrates the canister 425 before insertion into the pressure vessel 412. In this embodiment the canister 425 includes the orifice 431 in the outer wall thereof and the divider wall 429 does not include a communication port therethrough. Within the scope of the present invention, the divider wall 429 may be formed with or without a communication port or ports therethrough.

The indented portion 420 of the pressure vessel 412 has a primary exit orifice 436 on one side thereof that is covered by a primary rupture disk 438 of any suitable construction. The primary exit orifice 436 is located adjacent to the orifice 431 in the outer wall of the primary canister 425. The indented portion 420 also comprises a secondary exit orifice 440 on the other side thereof that is covered by a secondary rupture disk 442 of any suitable construction. A generally cylindrical diffuser 444 of any suitable construction surrounds the indented portion 420 and the primary and secondary exit orifices 436 and 440, respectively, and is secured to the pressure vessel 412 in any suitable manner, such as by-welding. The diffuser 444 is adapted for communication with an air bag module or other safety device (not shown).

A secondary gas generant canister 433 like the primary gas generant canister 425 is mounted within the secondary gas generant portion 424 of the pressure vessel 412 in inverted relation to the primary canister 425 such that the inner divider wall 435 of the secondary canister 433 is disposed adjacent to and in generally parallel relation to the inner divider wall 429 of the primary canister. The divider wall 435 of the secondary canister 433 may be provided with one or more communication ports 437 of any suitable size therethrough that are disposed adjacent to the communication port or ports 430 of the divider wall 429 of the primary canister 425. Alternatively, the divider wall 435 of the secondary canister 433 may be formed without a communication port or ports therethrough.

The divider wall 435 of the secondary canister 433 extends from one side of the central portion 420 of the pressure vessel 412 to the other side of the indented portion 420 to define the secondary gas generant portion 424 of the pressure vessel that includes the secondary exit orifice 440 and secondary rupture disk 442. The outer wall of the secondary canister 433 has an orifice 439 therethrough that is disposed adjacent to the secondary exit orifice 440.

An igniter body 450 formed of any suitable material and supporting a secondary ignition device 452 of any suitable construction is secured to the second or opposite end of the pressure vessel 412 in any suitable manner, such as by crimping. Within the secondary gas generant canister, there is mounted secondary gas generating energetics 454 of any suitable type that may be in the form of pellets or a solid grain, and may be the same as or different in type and amount from the primary energetics 446 in the primary canister 425.

The primary gas generant portion 422 and secondary gas generant portion 424 of the pressure vessel 412 are filled with a suitable gas, e.g., nitrogen or an inert gas such as argon or helium, or a mixture thereof, that is under a suitable predetermined pressure.

The operation of the inflator 410 shown in FIGURE 5 is similar to the operation of the inflator 10 hereinbefore described. In the inflator 410, the divider walls 429 and 435 of the primary and secondary canisters 425 and 433, respectively, serve to separate the primary and secondary gas generant portions 422 and 424 of the pressure vessel 412 and thus a separate divider like the divider 26 of the inflator 10 shown in FIGURE 1 is not required.

Within the scope of the present invention, a gas generant canister like the primary and secondary canisters 425 and 433, respectively, could be provided in only one of the primary or secondary gas generant portions 422 and 424, respectively. The other gas generant portion could include energetics of any suitable type mounted therein in any suitable manner, such as that shown in FIGURE 1. In this alternate construction, the divider wall of the one gas generant canister would serve to separate the primary and secondary gas generant portions of the pressure vessel.

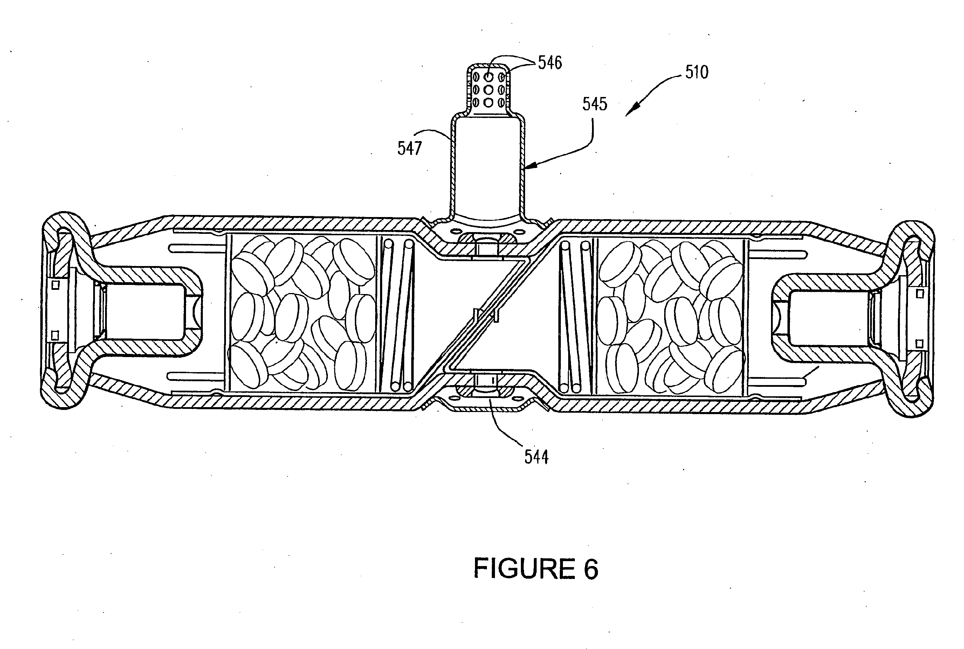

FIGURE 6 illustrates a multi-level output inflator 510 that is substantially the same in construction and operation to the inflator 410 shown in FIGURE 5, with the exception that the diffuser 544 is provided with a standpipe 545 for interface with the air bag module (not shown). The standpipe 545 has orifices 546 in its side wall 547 and is the same in construction and operation as the standpipe 245 hereinbefore described with respect to the embodiment shown in FIGURE 3.

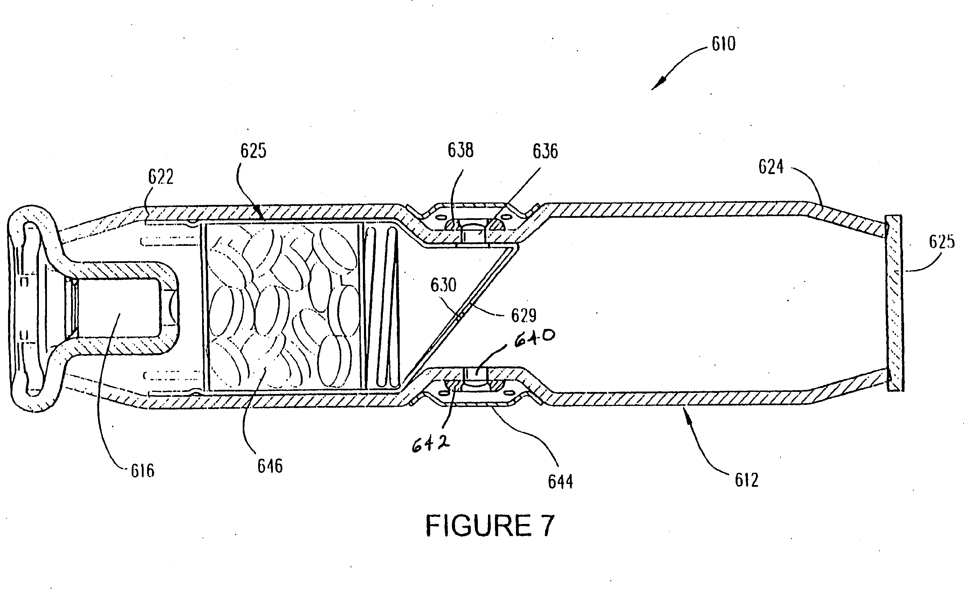

FIGURE 7 is directed to another embodiment according to the present invention of the inflator of the present invention which illustrates the simple manner in which the multi-level inflator of FIGURE 5 can be converted into a single level inflator 610 wherein there are no energetics in the secondary portion 624 of the pressure vessel 612. The end of the secondary portion 624 is closed by a suitable closure member 625 of any suitable construction that is secured thereto in any suitable manner such as by crimping or welding. The primary gas generant portion 622 of the pressure vessel 612 includes a primary ignition device 616, a primary gas generant canister 625, primary energetics 646, a primary exit orifice 636, a primary rupture disk 638 and a diffuser 644 which are constructed and operate in substantially the same manner as those shown in FIGURE 5. A secondary exit orifice 640 and rupture disk 642 may be provided in the secondary portion 624 when one or more communication ports 630 are provided in the divider wall 629 of the primary canister 625.

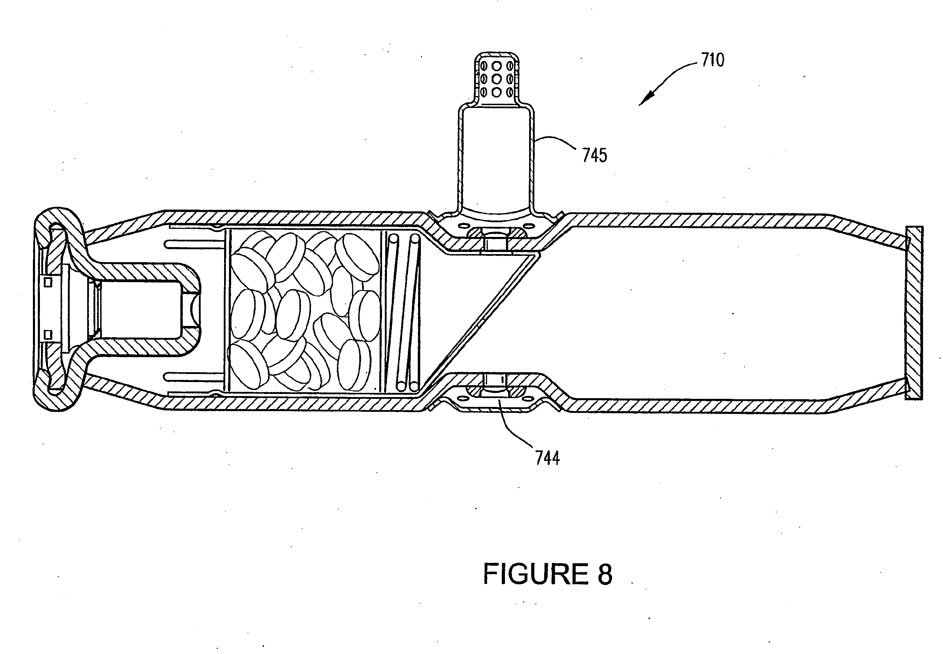

FIGURE 8 illustrates a single level inflator 710 that is substantially the same in construction and operation to the inflator 610 shown in FIGURE 7, with the exception that the diffuser 744 is provided with a standpipe 745 for interface with the air bag module (not shown). The standpipe 745 is the same in construction and operation to the standpipe 245 hereinbefore described with respect to the embodiment shown in FIGURE 3.

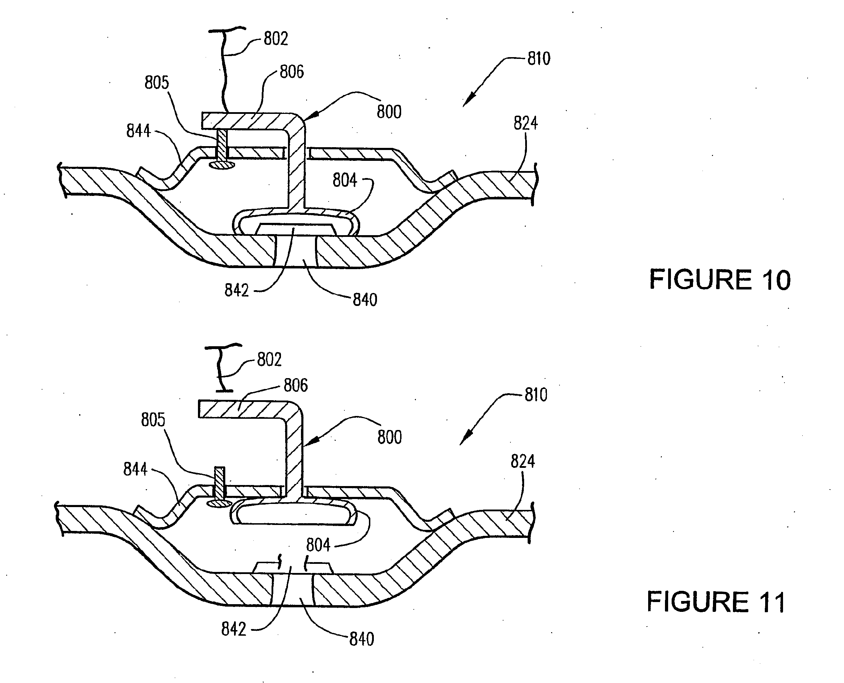

FIGURES 10 and 11 illustrate a further embodiment of the present invention in which a release device 800 is movably mounted on the diffuser 844 of the inflator 810 adjacent to the secondary exit orifice 840 and secondary rupture disk 842. The release device 800 is operatively connected to a tether 802 that is in turn connected to the air bag (not shown) to limit the expansion thereof.

As shown in FIGURE 10, the release device 800 comprises a cup-shaped portion 804 that surrounds the secondary exit orifice 840 and secondary rupture disk 842. An arm 806 is connected to the cup-shaped portion 804 and is slidably mounted on the diffuser 844. The arm 806 is removably attached in any suitable manner to a release member 805 of any suitable construction that is removably connected to the tether 802 in any suitable manner.

In the position shown in FIGURE 10, the release device 800 is connected to the tether 802 to limit the size of the air bag expansion in response to initiation of the primary energetics and in the absence of initiation of the secondary energetics in the secondary gas generant portion 824 of the inflator. Upon the ignition of the secondary energetics, the pressurized gas created in the secondary gas generant portion opens the secondary rupture disk 842 to allow flow through the secondary exit orifice 840 into the diffuser 844. This gas flow enters the cup-shaped portion 804 of the release device 800 to move it outwardly to the position shown in FIGURE 11 wherein the arm 806 has separated from the release member 805 and the tether 802 is released to allow additional expansion of the air bag when the primary and secondary energetics have been ignited in the inflator.

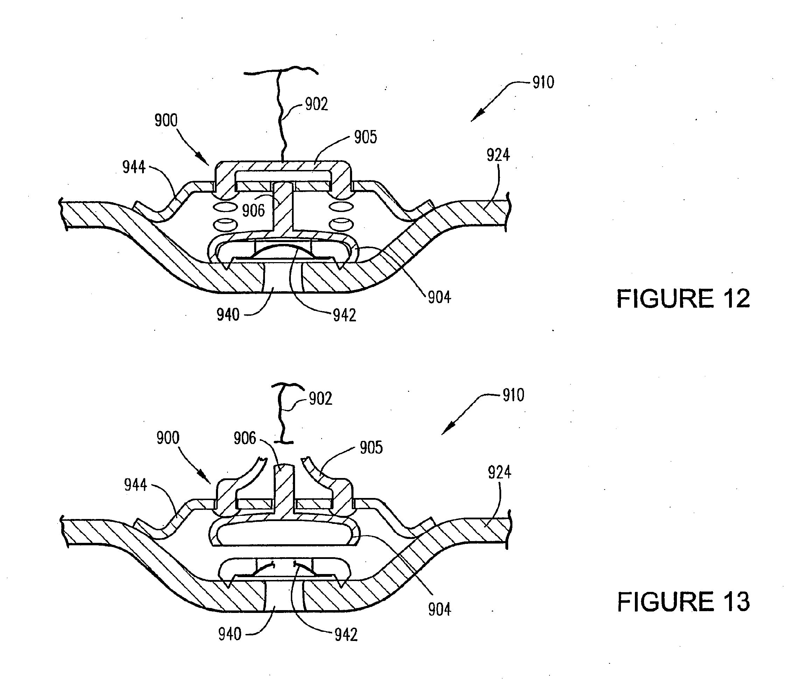

FIGURES 12 and 13 illustrate a second example of a release device 900 that is removably mounted on the diffuser 944 of the inflator 910 adjacent to the secondary exit orifice 940 and secondary rupture disk 942. The release device 900 is operatively connected to a tether 902 that is in turn connected to the air bag (not shown) to limit the expansion thereof.

As shown in FIGURE 12, the release device 900 comprises a cup-shaped portion 904 that surrounds the secondary exit orifice 940 and rupture disk 942. An arm 906 is connected to the cup-shaped portion 904 and is slidably mounted on the diffuser 944 for movement between a first position shown in FIGURE 12 and a second position shown in FIGURE 13 wherein it extends outwardly of the diffuser. A frangible release member 905 of any suitable construction is mounted on the diffuser 944 in alignment with the arm 906 when it moves outwardly of the diffuser 944. The release member 905 is removably connected to the tether 902 in any suitable manner.

In the position shown in FIGURE 12, the release device 900 is connected to the tether 902 to limit the size of the air bag expansion in response to the initiation of the primary energetics and in the absence of initiation of the secondary energetics in the secondary gas generant portion 924 of the inflator 910. Upon the ignition of the secondary energetics, the pressurized gas created by the secondary portion 924 opens the secondary rupture disk 942 to allow gas flow through the secondary exit orifice 940 into the diffuser 944. This gas flow enters the cup-shaped portion 904 of the release device 900 to move it outwardly to the position shown in FIGURE 13 wherein it is moved outwardly of the diffuser 944 into engagement with the release member 905 to break it and release the tether 902, thereby allowing additional expansion of the air bag when both the primary and secondary energetics have been ignited in the inflator.

Within the scope of the present invention, the tether release device may be of any suitable construction and operation. The significant feature is that it is mounted adjacent to the secondary exit orifice for operation in response to initiation of the secondary energetics to allow further expansion of the air bag when both the primary and secondary energetics are initiated.

From the foregoing description, it will be readily seen that the new and improved inflator of the present invention is compact, low in cost, simple in construction, simple and reliable in operation, easily constructed and easily convertible from a multi-level output to a single level output construction.

## Claims

1. A gas generator 610 for an air bag or other safety device, comprising:
an elongated pressure vessel 612 having a primary gas generant portion 622 with a first open end and a secondary portion with a second open end;
said primary gas generating portion 622 having a primary ignition device 616 and primary gas generating energetics disposed therein, said primary ignition device being mounted on said pressure vessel at said first open end;
a pressure vessel closure secured to said second end of said pressure vessel 612;
said primary gas generant portion 622 having a gas therein under a predetermined pressure; E29
said pressure vessel 612 having a midportion, a divider wall 629 disposed within the midportion of said pressure vessel to separate said primary gas generant portion and said secondary portion; and
said divider wall 629 being separate from said pressure vessel and being in non-hermetic engagement therewith at the periphery thereof;
said pressure vessel 612 having a primary exit orifice in said midportion thereof that is in communication with said primary gas generant portion, a primary rupture disk disposed over said primary exit orifice;
wherein a primary canister 625 containing said primary energetics is positioned in said primary gas generant portion, **characterised by** that said divider wall 629 is the inner end wall of said primary canister 625.

2. The gas generator of claim 1 wherein the midportion of said pressure vessel 612 is indented.

3. The gas generator of claim 2 wherein a diffuser surrounds said primary exit orifice 636 and the midportion of said pressure vessel, said diffuser being in communication with the air bag and being mounted on said indented portion.

4. The gas generator of claim 1 wherein said divider wall 629 is secured to the midportion of said pressure vessel.

5. The gas generator of claim 1 wherein said divider wall 629 has at least one communication port therethrough.

6. The gas generator of claim 5 wherein said communication port is oriented to direct gas flow therethrough in a direction that is generally radial or perpendicular to the longitudinal axis of said pressure vessel 612.

7. The gas generator of claim 1 wherein said divider wall 629 comprises a central longitudinally extending portion, a first transverse end portion disposed adjacent to the midportion of said pressure vessel on one side thereof near said primary gas generant portion, and a second transverse end portion disposed adjacent to the midportion of said pressure vessel on the other side thereof near said secondary portion.

8. The gas generator of claim 1 wherein said primary canister 625 has an orifice therethrough in alignment with said primary exit orifice.

9. The gas generator of claim 1 wherein said secondary portion is a gas generant portion, said pressure vessel closure comprises a secondary ignition device, secondary gas generating energetics are disposed in said secondary gas generant portion, said midportion of said pressure vessel has a secondary exit orifice in communication with said secondary gas generant portion, and a secondary rupture disk is disposed over said secondary exit orifice whereby said inflator is a multi-level output inflator.

10. The gas generator of claim 9 wherein the midportion of said pressure vessel 612 is indented.

11. The gas generator of claim 10 wherein a diffuser 644 surrounds the midportion of said pressure vessel and said primary and secondary exit orifices, said diffuser being in communication with the air bag or other safety device and being mounted on said indented portion.

12. The gas generator of claim 11 wherein said diffuser 644 is constructed to create a back pressure therein when one of the gas generant portions is activated to delay the functioning of the exit orifice in the other gas generant portion that is not activated at the same time as the one gas generant portion.

13. The gas generator of claim 1 wherein said secondary portion 624 has said gas under a predetermined pressure therein.

14. The gas generator of claim 1 wherein said gas is air, an inert gas or nitrogen.

15. The gas generator of claim 5 wherein said midportion of said pressure vessel 612 has a secondary exit orifice in communication with said secondary portion, and a secondary rupture disk is disposed over said secondary exit orifice.

16. A multi-level gas generator 410 for an air bag or other safety device, comprising:
an elongated pressure vessel 412 having a primary gas generant portion 422 with a first open end and a secondary gas generant portion 424 with a second open end;
said primary gas generant portion 422 having a primary ignition device 416 and primary gas generating energetics disposed therein, said primary ignition device being mounted on said pressure vessel at said first open end;
said secondary gas generant portion 424 having a secondary ignition device and secondary gas generating energetics disposed therein, said secondary ignition device being mounted on said pressure vessel at said second open end;
said primary gas generant portion 422 and said secondary gas generant portion having a gas therein under a predetermined pressure;
said pressure vessel 412 having a midportion, a divider wall 429 disposed within said midportion to separate said primary and secondary gas generant portions; said divider wall being separate from said pressure vessel and being in non-hermetic engagement therewith at the periphery thereof; and
said pressure vessel 412 having a primary exit orifice 436 in said midportion that is in communication with said primary gas generant portion, a primary rupture disk disposed over said primary exit orifice, a secondary exit orifice in said midportion that is in communication with said secondary gas generant portion, and a secondary rupture disk disposed over said secondary exit orifice;
wherein a primary canister 425 containing said primary energetics is positioned in said primary gas generant portion, **characterised by** that said divider wall 429 is the inner end wall of said primary canister.

17. A multi-level gas generator of claim 16 wherein the midportion of said pressure vessel 412 is indented.

18. The gas generator of claim 17 wherein a diffuser 444 is mounted on and surrounds said midportion and said primary and secondary exit orifices, said diffuser being in communication with the air bag or other safety device and being mounted on said indented portion.

19. The gas generator of claim 18 wherein said diffuser 444 is constructed to create a back pressure therein when one of said gas generant portions is activated to delay the functioning of the exit orifice in the other gas generant portion that is not activated at the same time as the one gas generant portion.

20. The multi-level gas generator of claim 16 wherein said divider wall 429 is secured to the midportion of said pressure vessel.

21. The multi-level gas generator of claim 16 wherein said divider wall 429 has at least one communication port therethrough.

22. The multi-level gas generator of claim 21 wherein said communication port is oriented to direct gas flow therethrough in a direction that is generally radial or perpendicular to the longitudinal axis of said pressure vessel 412.

23. The multi-level gas generator of claim 16 wherein said divider wall 429 comprises a central longitudinally extending portion, a first transverse end portion disposed adjacent to the midportion of said pressure vessel on one side thereof near said primary gas generant portion, and a second transverse end portion disposed adjacent to the midportion of said pressure vessel on the other side thereof near said secondary gas generant portion.

24. The multi-level gas generator of claim 16 wherein said primary canister 425 has an orifice therethrough in alignment with said primary exit orifice.

25. The multi-level gas generator of claim 24 wherein a secondary canister 433 containing said secondary energetics is positioned in said secondary gas generant portion, said secondary canister having an inner secondary divider end wall positioned adjacent to and substantially parallel to said primary divider wall.

26. The multi-level gas generator of claim 25 wherein said secondary canister 433 has an orifice therethrough in alignment with said secondary exit orifice.

27. The multi-level gas generator of claim 26 wherein said primary divider wall 429 and said secondary divider wall have one or more aligned communication ports therethrough.

28. The multi-level gas generator of claim 17 wherein said divider wall 429 comprises a central longitudinally extending portion, a first transverse end portion disposed adjacent to the indented midportion of said pressure vessel on one side thereof near said primary gas generant portion, and a second transverse end portion disposed adjacent to the indented midportion of said pressure vessel on the other side thereof near said secondary gas generant portion.

## Patentansprüche

1. Gasgenerator 610 für einen Airbag oder eine andere Sicherheitsvorrichtung, umfassend:
einen länglichen Druckbehälter 612, der einen primären Gaserzeugungsabschnitt 622 mit einem ersten offenen Ende und einen sekundären Abschnitt mit einem zweiten offenen Ende aufweist;
wobei der primäre Gaserzeugungsabschnitt 622 eine primäre Zündvorrichtung 616 und darin angeordnete primäre gaserzeugende Energieträger aufweist, wobei die primäre Zündvorrichtung an dem ersten offenen Ende auf den Druckbehälter montiert ist;
einen Druckbehälterverschluss, der an dem zweiten Ende des Druckbehälters 612 befestigt ist;
wobei der primäre Gaserzeugungsabschnitt 622 ein Gas unter einem vorbestimmten Druck enthält;
wobei der Druckbehälter 612 einen Mittelabschnitt aufweist, wobei eine Trennwand 629 in dem Mittelabschnitt des Druckbehälters angeordnet ist, um den primären Gaserzeugungsabschnitt und den sekundären Abschnitt zu trennen; und
wobei diese Trennwand 629 von dem Druckbehälter getrennt ist und mit diesem an dessen Umfang in einem nicht hermetischen Eingriff ist;
wobei der Druckbehälter 612 in seinem Mittelabschnitt eine primäre Auslassöffnung aufweist, die mit dem primären Gaserzeugungsabschnitt verbunden ist, wobei eine primäre Berstscheibe über dieser primären Auslassöffnung angeordnet ist;
wobei ein primärer Behälter 625, der die primären Energieträger enthält, in dem primären Gaserzeugungsabschnitt angeordnet ist, **dadurch gekennzeichnet, dass** die Trennwand 629 die innere Endwand dieses primären Behälters 625 ist.

2. Gasgenerator nach Anspruch 1, bei dem der Mittelabschnitt des Druckbehälters 612 eingebuchtet ist.

3. Gasgenerator nach Anspruch 2, bei dem ein Diffusor die primäre Auslassöffnung 636 und den Mittelabschnitt des Druckbehälters umgibt, wobei der Diffusor mit dem Airbag verbunden und auf den eingebuchteten Abschnitt montiert ist.

4. Gasgenerator nach Anspruch 1, bei dem die Trennwand 629 an dem Mittelabschnitt des Druckbehälters befestigt ist.

5. Gasgenerator nach Anspruch 1, bei dem die Trennwand 629 mindestens eine Verbindungsöffnung dahindurch aufweist.

6. Gasgenerator nach Anspruch 5, bei dem die Verbindungsöffnung so ausgerichtet ist, dass sie den Gasstrom dahindurch in eine Richtung leitet, die im Allgemeinen radial oder perpendikulär zur Längsachse des Druckbehälters 612 ist.

7. Gasgenerator nach Anspruch 1, bei dem die Trennwand 629 einen sich in Längsrichtung erstreckenden mittleren Abschnitt, einen ersten quer verlaufenden Endabschnitt, der angrenzend an den Mittelabschnitt des Druckbehälters auf einer Seite desselben nahe dem primären Gaserzeugungsabschnitt angeordnet ist, und einen zweiten quer verlaufenden Endabschnitt, der angrenzend an den Mittelabschnitt des Druckbehälters auf der anderen Seite desselben nahe dem sekundären Abschnitt angeordnet ist, umfasst.

8. Gasgenerator nach Anspruch 1, bei dem der primäre Behälter 625 eine Öffnung dahindurch aufweist, die mit der primären Auslassöffnung gefluchtet ist.

9. Gasgenerator nach Anspruch 1, bei dem der sekundäre Abschnitt ein Gaserzeugungsabschnitt ist, wobei der Druckbehälterverschluss eine sekundäre Zündvorrichtung umfasst, wobei sekundäre gaserzeugende Energieträger in diesem sekundären Gaserzeugungsabschnitt angeordnet sind, wobei der Mittelabschnitt des Druckbehälters eine mit dem sekundären Gaserzeugungsabschnitt verbundene sekundäre Auslassöffnung aufweist und eine sekundäre Berstscheibe über dieser sekundären Auslassöffnung angeordnet ist, wodurch der Gasgenerator ein Gasgenerator mit mehrstufigem Ausgang ist.

10. Gasgenerator nach Anspruch 9, bei dem der Mittelabschnitt des Druckbehälters 612 eingebuchtet ist.

11. Gasgenerator nach Anspruch 10, bei dem ein Diffusor 644 den Mittelabschnitt des Druckbehälters und die primären und sekundären Auslassöffnungen umgibt, wobei der Diffusor mit dem Airbag oder einer anderen Sicherheitsvorrichtung verbunden und auf den eingebuchteten Abschnitt montiert ist.

12. Gasgenerator nach Anspruch 11, bei dem der Diffusor 644 so ausgeführt ist, dass er darin einen Gegendruck erzeugt, wenn einer der Gaserzeugungsabschnitte aktiviert wird, um das Wirken der Auslassöffnung in dem anderen Gaserzeugungsabschnitt zu verzögern, der nicht zur selben Zeit wie der eine Gaserzeugungsabschnitt aktiviert wird.

13. Gasgenerator nach Anspruch 1, bei dem der sekundäre Abschnitt 624 das Gas unter einem vorbestimmten Druck enthält.

14. Gasgenerator nach Anspruch 1, bei dem das Gas Luft, ein Inertgas oder Stickstoff ist.

15. Gasgenerator nach Anspruch 5, bei dem der Mittelabschnitt des Druckbehälters 612 eine mit dem sekundären Abschnitt verbundene sekundäre Auslassöffnung aufweist und eine sekundäre Berstscheibe über dieser sekundären Auslassöffnung angeordnet ist.

16. Mehrstufiger Gasgenerator 410 für einen Airbag oder eine andere Sicherheitsvorrichtung, umfassend:
einen länglichen Druckbehälter 412, der einen primären Gaserzeugungsabschnitt 422 mit einem ersten offenen Ende und einen sekundären Gaserzeugungsabschnitt 424 mit einem zweiten offenen Ende aufweist;
wobei der primäre Gaserzeugungsabschnitt 422 eine primäre Zündvorrichtung 416 und darin angeordnete primäre gaserzeugende Energieträger aufweist, wobei die primäre Zündvorrichtung an dem ersten offenen Ende auf den Druckbehälter montiert ist;
wobei der sekundäre Gaserzeugungsabschnitt 424 eine sekundäre Zündvorrichtung und darin angeordnete sekundäre gaserzeugende Energieträger aufweist, wobei die sekundäre Zündvorrichtung an dem zweiten offenen Ende auf den Druckbehälter montiert ist;
wobei der primäre Gaserzeugungsabschnitt 422 und der sekundäre Gaserzeugungsabschnitt ein Gas unter einem vorbestimmten Druck enthalten;
wobei der Druckbehälter 412 einen Mittelabschnitt aufweist, wobei eine Trennwand 429 in dem Mittelabschnitt angeordnet ist, um den ersten und den zweiten Gaserzeugungsabschnitt zu trennen; wobei diese Trennwand von dem Druckbehälter getrennt ist und mit diesem an dessen Umfang in einem nicht hermetischen Eingriff ist; und
wobei der Druckbehälter 412 eine mit dem primären Gaserzeugungsabschnitt verbundene primäre Auslassöffnung 436 in dem Mittelabschnitt, eine über dieser primären Auslassöffnung angeordnete primäre Berstscheibe, eine mit dem sekundären Gaserzeugungsabschnitt verbundene sekundäre Auslassöffnung in dem Mittelabschnitt und eine über dieser sekundären Auslassöffnung angeordnete sekundäre Berstscheibe aufweist;
wobei ein primärer Behälter 425, der die primären Energieträger enthält, in dem primären Gaserzeugungsabschnitt angeordnet ist, **dadurch gekennzeichnet, dass** die Trennwand 429 die innere Endwand dieses primären Behälters ist.

17. Mehrstufiger Gasgenerator nach Anspruch 16, bei dem der Mittelabschnitt des Druckbehälters 412 eingebuchtet ist.

18. Gasgenerator nach Anspruch 17, bei dem ein Diffusor 444 auf den Mittelabschnitt montiert ist und diesen und die primären und sekundären Auslassöffnungen umgibt, wobei der Diffusor mit dem Airbag oder einer anderen Sicherheitsvorrichtung verbunden und auf den eingebuchteten Abschnitt montiert ist.

19. Gasgenerator nach Anspruch 18, bei dem der Diffusor 444 so ausgeführt ist, dass er darin einen Gegendruck erzeugt, wenn einer der Gaserzeugungsabschnitte aktiviert wird, um das Wirken der Auslassöffnung in dem anderen Gaserzeugungsabschnitt zu verzögern, der nicht zur selben Zeit wie der eine Gaserzeugungsabschnitt aktiviert wird.

20. Mehrstufiger Gasgenerator nach Anspruch 16, bei dem die Trennwand 429 an dem Mittelabschnitt des Druckbehälters befestigt ist.

21. Mehrstufiger Gasgenerator nach Anspruch 16, bei dem die Trennwand 429 mindestens eine Verbindungsöffnung dahindurch aufweist.

22. Mehrstufiger Gasgenerator nach Anspruch 21, bei dem die Verbindungsöffnung so ausgerichtet ist, dass sie den Gasstrom dahindurch in eine Richtung leitet, die im Allgemeinen radial oder perpendikulär zur Längsachse des Druckbehälters 412 ist.

23. Mehrstufiger Gasgenerator nach Anspruch 16, bei dem die Trennwand 429 einen sich in Längsrichtung erstreckenden mittleren Abschnitt, einen ersten quer verlaufenden Endabschnitt, der angrenzend an den Mittelabschnitt des Druckbehälters auf einer Seite desselben nahe dem primären Gaserzeugungsabschnitt angeordnet ist, und einen zweiten quer verlaufenden Endabschnitt, der angrenzend an den Mittelabschnitt des Druckbehälters auf der anderen Seite desselben nahe dem sekundären Gaserzeugungsabschnitt angeordnet ist, umfasst.

24. Mehrstufiger Gasgenerator nach Anspruch 16, bei dem der primäre Behälter 425 eine Öffnung dahindurch aufweist, die mit der primären Auslassöffnung gefluchtet ist.

25. Mehrstufiger Gasgenerator nach Anspruch 24, bei dem ein sekundärer Behälter 433, der die sekundären Energieträger enthält, in dem sekundären Gaserzeugungsabschnitt angeordnet ist, wobei dieser sekundäre Behälter eine innere sekundäre Trennendwand aufweist, die angrenzend an die primäre Trennwand und im Wesentlichen parallel zu ihr angeordnet ist.

26. Mehrstufiger Gasgenerator nach Anspruch 5, bei dem der sekundäre Behälter 433 eine Öffnung dahindurch aufweist, die mit der sekundären Auslassöffnung gefluchtet ist.

27. Mehrstufiger Gasgenerator nach Anspruch 26, bei dem die primäre Trennwand 429 und die sekundäre Trennwand eine oder mehrere gefluchtete Verbindungsöffnungen dahindurch aufweisen.

28. Mehrstufiger Gasgenerator nach Anspruch 17, bei dem die Trennwand 429 einen sich in Längsrichtung erstreckenden mittleren Abschnitt, einen ersten quer verlaufenden Endabschnitt, der angrenzend an den eingebuchteten Mittelabschnitt des Druckbehälters auf einer Seite desselben nahe dem primären Gaserzeugungsabschnitt angeordnet ist, und einen zweiten quer verlaufenden Endabschnitt, der angrenzend an den eingebuchteten Mittelabschnitt des Druckbehälters auf der anderen Seite desselben nahe dem sekundären Gaserzeugungsabschnitt angeordnet ist, umfasst.

## Revendications

1. Générateur de gaz (610) pour un coussin gonflable ou autre dispositif de sécurité, comprenant :
un récipient allongé sous pression (612) comportant une portion primaire de génération de gaz (622) avec une première extrémité ouverte et une portion secondaire avec une deuxième extrémité ouverte ;
ladite portion primaire de génération de gaz (622) ayant un dispositif d'allumage primaire (616) et des énergétiques primaires générateurs de gaz disposés à l'intérieur, ledit dispositif d'allumage primaire étant monté sur ledit récipient sous pression au niveau de ladite première extrémité ouverte ;
une fermeture de récipient sous pression fixée à ladite deuxième extrémité dudit récipient sous pression (612) ;
ladite portion primaire de génération de gaz (622) comprenant à l'intérieur un gaz à une pression prédéterminée ;
ledit récipient sous pression (612) comportant une portion centrale, une paroi séparatrice (629) disposée dans la portion centrale dudit récipient sous pression pour séparer ladite portion primaire de génération de gaz et ladite portion secondaire ; et
ladite paroi séparatrice (629) étant séparée dudit récipient sous pression et étant en engagement non hermétique avec celui-ci au niveau de sa périphérie ;
ledit récipient sous pression (612) comportant un orifice de sortie primaire dans ladite portion centrale de celui-ci qui est en communication avec ladite portion primaire de génération de gaz, un disque de rupture primaire disposé sur ledit orifice de sortie primaire ;
dans lequel une cartouche primaire (625) contenant lesdits énergétiques primaires est positionnée dans ladite portion primaire de génération de gaz, **caractérisé en ce que** ladite paroi séparatrice (629) est la paroi d'extrémité intérieure de ladite cartouche primaire (625).

2. Générateur de gaz selon la revendication 1, dans lequel la portion centrale dudit récipient sous pression (612) est dentelée.

3. Générateur de gaz selon la revendication 2, dans lequel un diffuseur entoure ledit orifice de sortie primaire (636) et la portion centrale dudit récipient sous pression, ledit diffuseur étant en communication avec le coussin gonflable et étant monté sur ladite portion dentelée.

4. Générateur de gaz selon la revendication 1, dans lequel ladite paroi séparatrice (629) est fixée à la portion centrale dudit récipient sous pression.

5. Générateur de gaz selon la revendication 1, dans lequel ladite paroi séparatrice (629) comporte au moins un orifice de communication à travers celle-ci.

6. Générateur de gaz selon la revendication 5, dans lequel ledit orifice de communication est orienté pour diriger un flux de gaz à travers celui-ci dans une direction qui est généralement radiale ou perpendiculaire à l'axe longitudinal dudit récipient sous pression (612).

7. Générateur de gaz selon la revendication 1, dans lequel ladite paroi séparatrice (629) comprend une portion centrale s'étendant longitudinalement, une première portion d'extrémité transversale disposée adjacente à la portion centrale dudit récipient sous pression sur un côté de celui-ci près de ladite portion primaire de génération de gaz, et une deuxième portion d'extrémité transversale disposée adjacente à la portion centrale dudit récipient sous pression sur l'autre côté de celui-ci près de ladite portion secondaire.

8. Générateur de gaz selon la revendication 1, dans lequel ladite cartouche primaire (625) comporte un orifice à travers celle-ci, en alignement avec ledit orifice de sortie primaire.

9. Générateur de gaz selon la revendication 1, dans lequel ladite portion secondaire est une portion de génération de gaz, ladite fermeture de récipient sous pression comprend un dispositif d'allumage secondaire, des énergétiques secondaires générateurs de gaz sont disposés dans ladite portion secondaire de génération de gaz, ladite portion centrale dudit récipient sous pression comporte un orifice de sortie secondaire en communication avec ladite portion secondaire de génération de gaz, et un disque de rupture secondaire est disposé sur ledit orifice de sortie secondaire, moyennant quoi ledit gonfleur est un gonfleur de sortie multi-niveaux.

10. Générateur de gaz selon la revendication 9, dans lequel la portion centrale dudit récipient sous pression (612) est dentelée.

11. Générateur de gaz selon la revendication 10, dans lequel un diffuseur (644) entoure la portion centrale dudit récipient sous pression et lesdits orifices de sortie primaire et secondaire, ledit diffuseur étant en communication avec le coussin gonflable ou autre dispositif de sécurité et étant monté sur ladite portion dentelée.

12. Générateur de gaz selon la revendication 11, dans lequel ledit diffuseur (644) est conçu pour créer une contre-pression à l'intérieur quand une des portions de génération de gaz est activée pour retarder le fonctionnement de l'orifice de sortie dans l'autre portion de génération de gaz qui n'est pas activée au même moment que l'une portion de génération de gaz.

13. Générateur de gaz selon la revendication 1, dans lequel ladite portion secondaire (624) comprend ledit gaz à une pression prédéterminée à l'intérieur de celle-ci.

14. Générateur de gaz selon la revendication 1, dans lequel ledit gaz est l'air, un gaz inerte ou l'azote.

15. Générateur de gaz selon la revendication 5, dans lequel ladite portion centrale dudit récipient sous pression (612) comporte un orifice de sortie secondaire en communication avec ladite portion secondaire, et un disque de rupture secondaire est disposé sur ledit orifice de sortie secondaire.

16. Générateur de gaz multi-niveaux (410) pour un coussin gonflable ou autre dispositif de sécurité, comprenant :
un récipient sous pression allongé (412) comportant une portion primaire de génération de gaz (422) avec une première extrémité ouverte et une portion secondaire de génération de gaz (424) avec une deuxième extrémité ouverte ;
ladite portion primaire de génération de gaz (422) ayant un dispositif d'allumage primaire (416) et des énergétiques primaires générateurs de gaz disposés à l'intérieur, ledit dispositif d'allumage primaire étant monté sur ledit récipient sous pression au niveau de ladite première extrémité ouverte ;
ladite portion secondaire de génération de gaz (424) ayant un dispositif d'allumage secondaire et des énergétiques secondaires générateurs de gaz disposés à l'intérieur,
ledit dispositif d'allumage secondaire étant monté sur ledit récipient sous pression au niveau de ladite deuxième extrémité ouverte ;
ladite portion primaire de génération de gaz (422) et
ladite portion secondaire de génération de gaz contenant un gaz à une pression prédéterminée à l'intérieur ;
ledit récipient sous pression (412) comportant une portion centrale, une paroi séparatrice (429) disposée dans ladite portion centrale pour séparer lesdites portions primaire et
secondaire de génération de gaz ; ladite paroi séparatrice étant séparée dudit récipient sous pression et étant en engagement non hermétique avec celui-ci au niveau de sa périphérie ; et
ledit récipient sous pression (412) comportant un orifice de sortie primaire (436) dans ladite portion centrale qui est en communication avec ladite portion primaire de génération de gaz, un disque de rupture primaire disposé sur ledit orifice de sortie primaire, un orifice de sortie secondaire dans ladite portion centrale qui est en communication avec ladite portion secondaire de génération de gaz, et un disque de rupture secondaire est disposé sur ledit orifice de sortie secondaire ;
dans lequel une cartouche primaire (425) contenant lesdits énergétiques primaires est positionnée dans ladite portion primaire de génération de gaz, **caractérisé en ce que** ladite paroi séparatrice (429) est la paroi d'extrémité intérieure de ladite cartouche primaire.

17. Générateur de gaz multi-niveaux selon la revendication 16, dans lequel la portion centrale dudit récipient sous pression (412) est dentelée.

18. Générateur de gaz selon la revendication 17, dans lequel un diffuseur (444) est monté sur et entoure ladite portion centrale et lesdits orifices de sortie primaire et secondaire, ledit diffuseur étant en communication avec le coussin gonflable ou autre dispositif de sécurité et étant monté sur ladite portion dentelée.

19. Générateur de gaz selon la revendication 18, dans lequel ledit diffuseur (444) est conçu pour créer une contre-pression à l'intérieur quand une desdites portions de génération de gaz est activée pour retarder le fonctionnement de l'orifice de sortie dans l'autre portion de génération de gaz qui n'est pas activée au même moment que l'une portion de génération de gaz.

20. Générateur de gaz multi-niveaux selon la revendication 16, dans lequel ladite paroi séparatrice (429) est fixée à la portion centrale dudit récipient sous pression.

21. Générateur de gaz multi-niveaux selon la revendication 16, dans lequel ladite paroi séparatrice (429) comporte au moins un orifice de communication à travers celle-ci.

22. Générateur de gaz multi-niveaux selon la revendication 21, dans lequel ledit orifice de communication est orienté pour diriger un flux de gaz à travers celui-ci dans une direction qui est généralement radiale ou perpendiculaire à l'axe longitudinal dudit récipient sous pression (412).

23. Générateur de gaz multi-niveaux selon la revendication 16, dans lequel ladite paroi séparatrice (429) comprend une portion centrale s'étendant longitudinalement, une première portion d'extrémité transversale disposée adjacente à la portion centrale dudit récipient sous pression sur un côté de celui-ci près de ladite portion primaire de génération de gaz, et une deuxième portion d'extrémité transversale disposée adjacente à la portion centrale dudit récipient sous pression sur l'autre côté de celui-ci près de ladite portion secondaire de génération de gaz.

24. Générateur de gaz multi-niveaux selon la revendication 16, dans lequel ladite cartouche primaire (425) comporte un orifice à travers celle-ci, en alignement avec ledit orifice de sortie primaire.

25. Générateur de gaz multi-niveaux selon la revendication 24, dans lequel une cartouche secondaire (433) contenant lesdits énergétiques secondaires est positionnée dans ladite portion secondaire de génération de gaz, ladite cartouche secondaire comportant une paroi d'extrémité séparatrice secondaire intérieure positionnée adjacente et sensiblement parallèle à ladite paroi séparatrice primaire.

26. Générateur de gaz multi-niveaux selon la revendication 25, dans lequel ladite cartouche secondaire (433) comporte un orifice à travers celle-ci, en alignement avec ledit orifice de sortie secondaire.

27. Générateur de gaz multi-niveaux selon la revendication 26, dans lequel ladite paroi séparatrice secondaire (429) et ladite paroi séparatrice secondaire ont un ou plusieurs orifices de communication alignés à travers celles-ci.

28. Générateur de gaz multi-niveaux selon la revendication 17, dans lequel ladite paroi séparatrice (429) comprend une portion centrale s'étendant longitudinalement, une première portion d'extrémité transversale disposée adjacente à la portion centrale dentelée dudit récipient sous pression sur un côté de celui-ci près de ladite portion primaire de génération de gaz, et une deuxième portion d'extrémité transversale disposée adjacente à la portion centrale dentelée dudit récipient sous pression sur l'autre côté de celui-ci près de ladite portion secondaire de génération de gaz.
